# EUROPÄISCHE PATENTSCHRIFT

(11) **EP 2 686 573 B1**
(45) Veröffentlichungstag und Bekanntmachung des Hinweises auf die Patenterteilung: **04.03.2015**
(21) Anmeldenummer: 12708014.1
(22) Anmeldetag: 08.03.2012
(51) Int. Cl.: F16D 55/224

(54) **BREMSEINRICHTUNG EINES SCHIENENFAHRZEUGS MIT IN NEUTRALPOSITION FEDERBELASTETER BREMSZANGENEINHEIT**
BRAKE DEVICE OF A RAIL VEHICLE WITH A BRAKE CALLIPER UNIT WHICH IS SPRING-LOADED INTO THE NEUTRAL POSITION
DISPOSITIF DE FREINAGE D'UN VÉHICULE SUR RAILS DOTÉ D'UNE UNITÉ MÂCHOIRE DE FREIN SOLLICITÉE EN POSITION NEUTRE PAR RESSORT

(30) Priorität: 17.03.2011 DE 102011014273
(43) Veröffentlichungstag der Anmeldung: 22.01.2014
(73) Patentinhaber: KNORR-BREMSE Systeme für Schienenfahrzeuge GmbH, 80809 München (DE)
(72) Erfinder: KRAUS, Harry-Werner, 81825 München (DE); HAUZENEDER, Markus, 81371 München (DE)
(86) Internationale Anmeldenummer: PCT/EP2012/053969
(87) Internationale Veröffentlichungsnummer: WO 2012/123318

(56) Entgegenhaltungen:
- DE-A1- 19 746 443
- DE-U- 6 751 080
- DE-U1- 29 515 260
- US-A- 5 462 139

## Beschreibung

Die Erfindung geht aus von einer Bremseinrichtung eines Schienenfahrzeugs, gemäß dem Oberbegriff von Anspruch 1.

Eine Bremszangeneinheit eines Schienenfahrzeugs ist beispielsweise aus der DE 10 2007 032 966 A1 bekannt. Durch einen Bremszylinder als Krafterzeuger werden Bremskräfte über eine Bremszange auf eine Bremsscheibe einer Scheibenbremse eines Schienenfahrzeugs aufgebracht. Der Bremszylinder ist dabei ein Betriebsbremszylinder, weil durch ihn im Laufe einer Betriebsbremsung die Betriebsbremskräfte erzeugt werden. Er kann als Membranzylinder oder als Kolbenzylinder mit Dichtungsmanschette ausgeführt sein. Weiterhin kann der Bremszylinder eine eingesetzte Zylinderbuchse aufweisen oder die Zylinderlauffläche kann direkt an der Innenwandung des Bremszylindergehäuses ausgebildet sein.

Zum Übertragen der Bremskräfte des Bremszylinders auf die Bremszange dient ein Getriebe, dort ein Excentergetriebe, wobei über eine an die Bremskolbenstange angelenkte Excenterwelle die Kolbenkraft entsprechend ihrem Hebelverhältnis verstärkt und auf die Zangenhebel der Bremszange weitergeleitet wird.

Für den Fall, dass neben der Betriebsbremse auch eine Park- oder Notbremse vorgesehen ist, umfasst die Bremszangeneinheit als Krafterzeuger auch einen Federspeicherbremszylinder. Dabei spannt wenigstens eine Speicherfeder einen Federspeicherbremskolben in Zuspannstellung vor, wobei durch Belüften einer Federspeicherbremskammer der Federspeicherbremskolben in Lösestellung und bei Entlüften in Zuspannstellung gebracht wird. Dabei wirkt die Federspeicherbremskolbenstange über die Betriebsbremskolbenstange auf die Excenterwelle des Excentergetriebes und damit auf die auf die Zangenhebel der Bremszange.

Der Betriebsbremszylinder mit dem Federspeicherbremszylinder bildet dann den Krafterzeuger, welcher über das Excentergetriebe auf die Bremszange wirkt. In der Regel sind diese Baugruppen in der Bremszangeneinheit miteinander verblockt, wie sie auch in der DE 10 2007 032 966 A1 dargestellt ist. Eine solche Bremszangeneinheit ist dann in der Regel über einen zentralen Aufhängebolzen in einer Konsole schwenkbar gelagert und über diese wiederum am Rahmen eines Drehgestells des Schienenfahrzeugs befestigt und wirkt auf eine mit einer Achse des Drehgestells mitdrehende Bremsscheibe.

Die Bremszangeneinheit kann also über die Bolzenaufhängung an der Konsole eine Pendelbewegung um die Mittelachse des Bolzens ausführen. Dies ist erforderlich, damit die Bremszangeneinheit sich z.B. bei einer einseitigen Einfederung des Drehgestelles ohne Verzwängung parallel zur Bremsscheibe ausrichten kann.

Der Schwerpunkt der Bremszangeneinheit liegt in der Regel in einer vertikalen Ebene, die den Bolzen beinhaltet, so dass die Bremszangeneinheit genau vertikal bzw. parallel zur Bremsscheibe in einer im Folgenden "Neutralposition" genannten Position oder Schwenklage ausgerichtet ist. Wenn jedoch der Schwerpunkt der Bremszangeneinheit nicht genau in dieser Ebene sondern seitlich versetzt dazu angeordnet ist, so hängt die Bremszangeneinheit aufgrund der Schwerkraft schräg im Drehgestell. Dadurch kommt es zu einer einseitigen Anlage der Bremsbeläge an der Bremsscheibe. Unerwünschter Schrägverschleiß der Bremsbeläge ist dann die Folge.

Weiterhin ergibt sich bei einer Querbeschleunigung, z.B. bei einer Kurvenfahrt oder durch den Sinuslauf der Achsen bedingt ein Drehmoment auf die Bremszangeneinheit um den Bolzen, wodurch die Bremszangeneinheit aus ihrer vertikalen Neutralposition ausgeschwenkt wird oder sogar zu Pendelschwingungen um den Bolzen als Pendelachse angeregt wird. Dann kann aber übermäßiger Verschleiß der Lagerbuchsen des Bolzens die Folge sein.

In der DE 295 15 260 U1 wird eine bolzengehalterte Aufhängevorrichtung für eine Bremszangeneinheit offenbart, mit einem mittel- oder unmittelbar an den Zangenhebeln um eine vertikale Achse drehbar angelenkten Gehäuse, wobei die Drehachse in einer radialen Mittelebene der Bremsscheibe etwa rechtwinkelig zu deren Achse verläuft. Dadurch können die Bremsbacken der Bremszangeneinheit Drehbewegungen der Bremsscheibe um die Fahrzeuglängsachse folgen.

Der vorliegenden Erfindung liegt demgegenüber die Aufgabe zugrunde, eine Bremseinrichtung eines Schienenfahrzeugs der eingangs erwähnten Art derart weiter zu entwickeln, dass die am Drehgestell durch die Konsole gelenkig aufgehängte Bremszangeneinheit mit möglichst großer Kraft in eine vertikale Lage zurückgestellt wird, um sie bei außermittigem Schwerpunkt bzw. bei Querbeschleunigungen in der vertikalen Position zu halten und Pendelschwingungen zu verhindern, aber dennoch eine Ausrichtung der Bremszangeneinheit parallel zur Bremsscheibe durch seitliches Ausschwenken zu ermöglichen, beispielsweise bei einer Bremsung mit einseitig einfederndem Drehgestell, um Verzwängungen zwischen den Bremsbelägen und der Bremsscheibe und ein damit verbundenes einseitiges Tragen der Bremsbeläge zu verhindern.

Diese Aufgabe wird erfindungsgemäß durch die Merkmale von Anspruch 1 gelöst.

### Offenbarung der Erfindung

### Die Erfindung sieht vor, dass

- die Rückstelleinrichtung wenigstens eine der Konsole zugeordnete Fläche aufweist, welche mit einer komplementären, einem Gehäuse der Bremszangeneinheit zugeordneten Fläche durch Keilwirkung zusammen wirkt, wobei die eine Fläche und die komplementäre Fläche
- in Bezug zu einer Mittelachse des Bolzens um einen Hebelarm versetzt angeordnet, in einer Richtung parallel zur Mittelachse des Bolzens relativ zueinander verschieblich gelagert und durch Federmittel gegeneinander derart belastet sind, dass
- bedingt durch die Keilwirkung zwischen der einen Fläche und der komplementären Fläche die Bremszangeneinheit in die Neutralposition vorgespannt ist.

Wenn dann die Bremszangeneinheit um den Bolzen aus der Neutralposition heraus schwenkt, dann gleitet die eine Fläche entlang der komplementären Fläche und die beiden Flächen werden wenigstens in der Richtung parallel zur Mittelachse des Bolzens gegen die Wirkung der Federmittel gegeneinander verschoben. Dabei können die eine Fläche und/oder die komplementäre Fläche am oder in Gehäuse bzw. an der Konsole verschieblich gelagert sein. Bedingt durch die Keilwirkung zwischen den beiden gegeneinander vorgespannten Flächen entsteht dann ein rückstellendes Drehmoment in die Neutralposition.

Die Größe des rückstellenden Drehmoments der Zentriereinrichtung ist dabei abhängig vom wirksamen Hebelarm, d.h. vom Abstand der beiden Flächen von der Mittelachse des Bolzens, von der durch die Federmittel aufbringbaren Federkraft, vom wirksamen Keil- bzw. Kegelwinkel und den von den Reibkoeffizienten zwischen den Flächen bzw. zwischen einer verschieblichen Fläche oder beiden verschieblichen Flächen und der jeweils zugeordneten Führungsfläche, entlang welcher die Verschiebung erfolgt. Der Fachmann kann dann diese Parameter so einstellen, dass er eine gewünschte Rückstellmomentcharakteristik erhält. In jedem Fall ist die Länge des Hebelarmes eine entscheidende Größe, welche beispielsweise relativ groß gewählt werden kann.

Durch die in den Unteransprüchen aufgeführten Maßnahmen sind vorteilhafte Weiterbildungen und Verbesserungen der in den unabhängigen Ansprüchen angegebenen Erfindung möglich.

Besonders bevorzugt ist die eine der Konsole zugeordnete Fläche an einem von der Konsole weg ragenden Arm gehalten oder ausgebildet. Einen Teil dieses Armes oder auch der gesamte Arm bildet dann den Hebelarm.

Besonders bevorzugt wird die eine der Konsole zugeordnete Fläche durch eine Außenfläche eines Zapfens gebildet, der an einem freien Ende des Armes parallel zur Mittelachse des Bolzens zumindest axialfest gehalten ist. Dabei kann der Zapfen in das freie Ende des Armes beispielsweise eingepresst oder eingeschraubt sein.

Ebenfalls besonders bevorzugt ist die komplementäre Fläche an einem in einer Führung des Gehäuses parallel zur Mittelachse des Bolzens verschieblich geführten Schieber ausgebildet, welcher durch die sich am Gehäuse abstützenden Federmittel gegen den Zapfen vorgespannt ist. Dieser Schieber kann beispielsweise ebenfalls bolzenförmig ausgebildet sein. Die Führung für den Schieber im Gehäuse wird dann beispielsweise durch eine im Gehäuse gelagerte Führungshülse gebildet.

Bevorzugt werden die Federmittel durch ein Tellerfederpaket seriell hintereinander angeordneter Tellerfedern gebildet. Tellerfedern können in dieser Konstellation relativ große Federkräfte aufbringen. Die Wirkrichtung der Federmittel, d.h. die Richtung, in welcher die Federkräfte als Druckkräfte wirken, ist hier parallel zur Mittelachse des Bolzens.

Ganz besonders bevorzugt wird die eine Fläche durch eine Kegel- oder Keilfläche und die komplementäre Fläche ebenfalls durch eine Kegel- oder Keilfläche gebildet. Beispielsweise wird die eine Fläche durch eine radial äußere Kegelfläche und die komplementäre Fläche durch eine radial innere Kegelfläche quasi als konkave Fläche gebildet. Die dem Arm der Konsole zugeordnete Kegelfläche bildet dann einen männlichen Teil, welcher mit dem weiblichen Teil in Form der komplementären Kegelfläche zusammen wirkt.

Beim Ausschwenken der Bremszangeneinheit relativ zur Konsole aus der Neutralposition heraus dreht dann auch die in der Führungshülse geführte komplementäre Kegelfläche in einer Richtung senkrecht zur Kegelmittelachse und gleitet dabei an der einen, am Arm der Konsole befestigten Kegelfläche entlang. Da in radialer Richtung keine Ausweichmöglichkeit besteht, wird der mit der komplementären Kegelfläche versehene Schieber bedingt durch die Keil- oder Kegelwirkung in der Führungshülse gegen die Wirkung des Federpakets aus Tellerfedern verschoben. Die durch die unter Axialdruck gesetzten Federmittel erzeugen aufgrund der Verschiebung eine Reaktionsfederkraft, welche versucht, den mit der komplementären Kegelfläche versehenen Schieber in seine Ausgangslage zurück zu verschieben. Diese rückstellende, durch die Federkräfte hervorgerufene Bewegung des Schiebers sorgt wiederum durch die Keil- oder Kegelwirkung zwischen den Beiden Kegelflächen dafür, dass an der sich dann an der Konsole über den Hebelarm abstützenden Bremszangeneinheit ein rückstellendes Drehmoment entsteht, welches die Bremszangeneinheit in ihre Neutralposition zurückdrängt.

Die Bremszangeneinheit beinhaltet als Krafterzeuger bevorzugt wenigstens einen pneumatischen aktiven Betriebsbremszylinder, mit einem im Gehäuse angeordneten und mit einer Betriebsbremskolbenstange versehenen Betriebsbremskolben, der durch Be- und Entlüften einer Bremskammer in Löse- oder Zuspannstellung bringbar ist.

Gemäß einer Weiterbildung kann die Bremszangeneinheit als Krafterzeuger auch einen Kombibremszylinder mit dem Betriebsbremszylinder und einem pneumatischen Federspeicherbremszylinder umfassen, wobei der passive Federspeicherbremszylinder einen in einem Federspeicherbremszylindergehäuse angeordneten, durch wenigstens eine Speicherfeder betätigbaren Federspeicherbremskolben mit einer Federspeicherbremskolbenstange beinhaltet, welche durch eine zentrale Bohrung einer Zwischenwand zwischen dem Betriebsbremszylinder und dem Federspeicherbremszylinder derart ragt, dass sie auf den Betriebsbremskolben wirkt, wobei der Federspeicherbremskolben eine die Speicherfeder beinhaltende Federkammer von einer be- und entlüftbaren Federspeicherbremskammer des Federspeicherbremszylinders trennt.

Bevorzugt bildet die Bremszangeneinheit eine Baueinheit mit einem Getriebe, dessen Getriebeeingang mit der Betriebsbremskolbenstange und dessen Getriebeausgang mit der Bremszange zusammen wirkt.

Genaueres geht aus der folgenden Beschreibung eines Ausführungsbeispiels hervor.

### Zeichnung

Nachstehend ist ein Ausführungsbeispiel der Erfindung in der Zeichnung dargestellt und in der nachfolgenden Beschreibung näher erläutert. In der Zeichnung zeigt
- Fig.1: eine Querschnittsdarstellung einer Bremszangeneinheit mit einem Kombibremszylinder gemäß einer bevorzugten Ausführungsform der Erfindung;
- Fig.2: eine Querschnittsdarstellung des Kombibremszylinders samt Getriebe von Fig.1;
- Fig.3: eine Vorderansicht der an einer mit einem Drehgestell verbundenen Konsole mittels eines Bolzens schwenkbar gelagerten Bremszangeneinheit von Fig.1;
- Fig.4: eine Seitenansicht der an der Konsole mittels des Bolzens schwenkbar gelagerten Bremszangeneinheit von Fig.1 mit einem Teilschnitt, welcher eine Sicht auf eine Rückstelleinrichtung ermöglicht;
- Fig.5: eine vertikale Querschnittsdarstellung der Rückstelleinrichtung von Fig.4;
- Fig.6: eine horizontale Querschnittsdarstellung der Rückstelleinrichtung von Fig.4 mit der Bremszangeneinheit in Neutralstellung;
- Fig.7: eine horizontale Querschnittsdarstellung der Rückstelleinrichtung von Fig.4 mit der Bremszangeneinheit in einer gegenüber der Neutralstellung ausgelenkten Stellung.

### Beschreibung des Ausführungsbeispiels

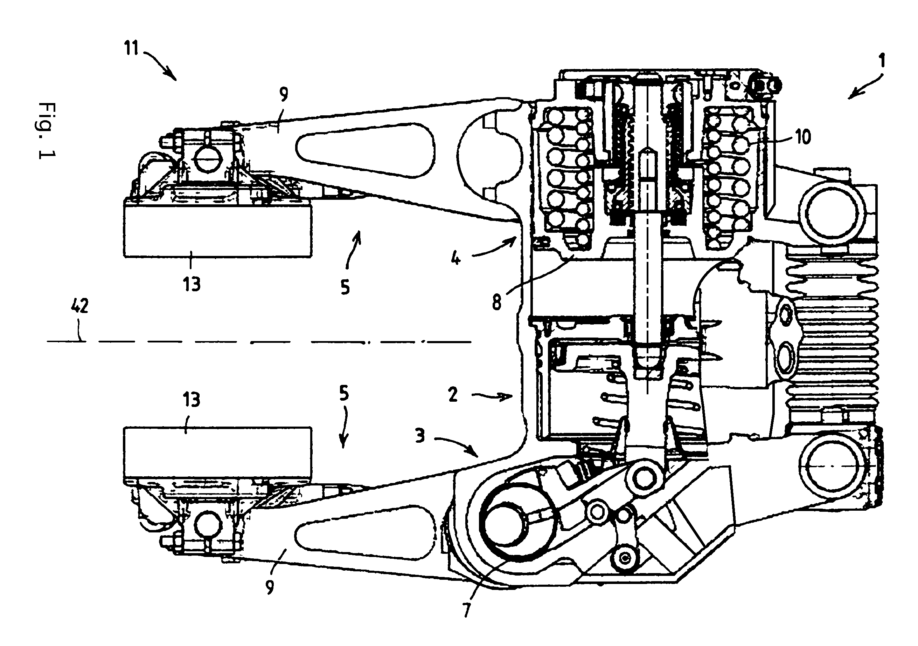

In Fig.1 ist ein Betriebsbremszylinder 2 Bestandteil eines Krafterzeugers 1, durch welchen Bremskräfte über ein Excentergetriebe 3 und eine Bremszange 5 auf eine dort nur durch ihre Mittelebene 42 angedeutete Bremsscheibe einer Scheibenbremse eines Schienenfahrzeugs aufgebracht werden. Der Betriebsbremszylinder 2 ist bevorzugt als Membranzylinder ausgebildet, alternativ könnte er auch ein Kolbenzylinder sein, wie in Fig.1 dargestellt.

Zum Übertragen der Bremskräfte von einer Betriebsbremskolbenstange 28 auf das Excentergetriebe 3 ist diese an eine Exzenterwelle 7 angelenkt, wodurch die Kolbenkraft entsprechend dem Hebelverhältnis verstärkt und auf die Zangenhebel 9, der Bremszange 5 weitergeleitet wird. Dieses Prinzip ist in DE 10 2007 032 966 A1 ausführlich beschrieben, deshalb soll hier nicht weiter darauf eingegangen werden.

Neben der Betriebsbremse ist hier auch eine Park- oder Notbremse vorgesehen ist. Dann umfasst der Krafterzeuger 1 neben dem Betriebsbremszylinder 2 und dem Excentergetriebe 3 auch einen Federspeicherbremszylinder 4. Der Betriebsbremszylinder 2 und der Federspeicherbremszylinder 4 wirken dann über das Excentergetriebe 3 auf die Bremszange 5, um diese zu betätigen.

Hierbei sind die vier Baugruppen - Federspeicherbremszylinder 4, Betriebsbremszylinder 2, Excentergetriebe 3 als Krafterzeuger 1 einerseits und die Bremszange 5 mit den Zangenhebeln 9 andererseits bevorzugt in einer Bremszangeneinheit 11 miteinander verblockt. Diese Bremszangeneinheit 11 wird an einem Drehgestell des Schienenfahrzeugs befestigt und wirkt über die endseitig an den Bremszangen 5 angeordneten Bremsbeläge 13 auf die mit einer Achse mitdrehenden Bremsscheibe.

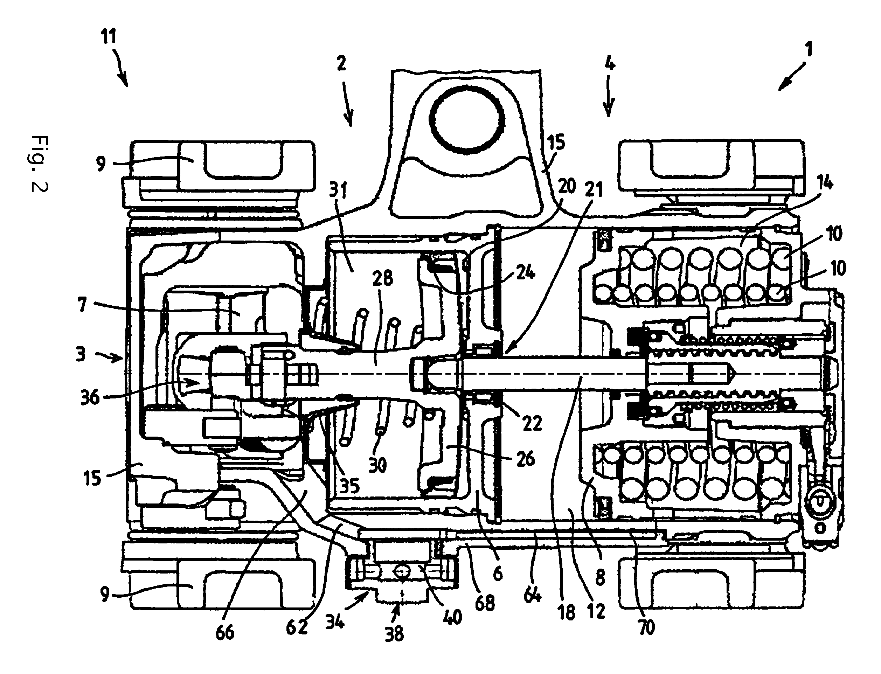

In Fig.2 ist der Krafterzeuger 1 im Längsquerschnitt gezeigt, wobei der Betriebsbremszylinder 2, das Exzentergetriebe 3 und der mit diesem baulich und funktionell verbundene Federspeicherbremszylinder 4 bevorzugt ein gemeinsames Gehäuse 15 aufweisen.

Der Betriebsbremszylinder 2 und der Federspeicherbremszylinder 4 sind durch eine Zwischenwand 6 voneinander getrennt. Innerhalb des Federspeicherbremszylinders 4 ist ein Federspeicherbremskolben 8 verschiebbar angeordnet, wobei an einer Seite des Federspeicherbremskolbens 8 eine Speicherfeder 10 anliegt. Die Speicherfeder 10 stützt sich an ihrer entgegen gesetzten Seite am Boden des Federspeicherbremszylinders 4 ab. Zwischen dem Federspeicherbremskolben 8 und der Zwischenwand 6 ist eine Federspeicherbremskammer 12 ausgebildet, welche zum Lösen und Zuspannen der Parkbremse be- und entlüftet wird. Bei Belüftung der Federspeicherbremskammer 12 wird der Federspeicherbremskolben 8 unter Verspannung der Speicherfeder 10 axial in Lösestellung der Feststellbremse verschoben. Bei dieser Verschiebung des Federspeicherbremskolbens 8 wird die Luft, welche innerhalb der die Speicherfeder 10 aufnehmenden Federkammer 14 ansteht, komprimiert und gelangt über eine später noch im Einzelnen erläuterte Be- und Entlüftungsbohrung 34 in die Atmosphäre. Wird dagegen zum Zwecke der Abbremsung die Federspeicherbremskammer 12 entlüftet, dann vermag die Speicherfeder 10 den Federspeicherbremskolben 8 in Zuspannstellung zu verschieben.

Der Federspeicherbremskolben 8 ist mit einer Federspeicherbremskolbenstange 18 verbunden, welche sich durch die Zwischenwand 6 in eine Betriebsbremskammer 20 des Betriebsbremszylinders 2 erstreckt. Eine in eine zentrale Bohrung 21 der Zwischenwand 6 eingesetzte Dichtungsanordnung 22 dichtet gegenüber der Federspeicherbremskolbenstange 18 während deren Längsbewegung ab. In die Betriebsbremskammer 20 mündet ein nicht gezeigter Einlass, über welchen zum Betätigen des Betriebsbremszylinders 2 Druckluft in eine Betriebsbremskammer 20 eingelassen und abgelassen wird. Die Druckluft wirkt auf einen innerhalb des Betriebsbremszylinders 2 axial verschieblichen Betriebsbremskolben 26 ein, der gegenüber einer Führungsfläche des Betriebsbremszylinders 2 mittels einer Dichtung 24 abgedichtet ist. Genauer trennt der Betriebsbremskolben 26 die mit Druckmittel be- und entlastbare Betriebsbremskammer 20 des Betriebsbremszylinders 2 von einer eine am Betriebsbremskolben 26 abgestützte Rückholfeder 30 aufnehmende Federkammer 31. Anstatt eines Betriebsbremskolbens 26 könnte auch eine elastische Membrane vorgesehen sein.

Der Betriebsbremskolben 26 ist mit der Betriebsbremskolbenstange 28 verbunden, die an die Excenterwelle 7 des Excentergetriebes 3 angelenkt ist. Der Betriebsbremszylinder 2 ist ein aktiver Bremszylinder, d.h. dass die Betriebsbremse durch Belüften der Betriebsbremskammer 20 zugespannt und durch Entlüften gelöst wird. Die sich einerseits am Betriebsbremskolben 26 und andererseits am Boden des Betriebsbremszylinders 2 abstützende Rückholfeder 30 sorgt dafür, dass die Betriebsbremskolbenstange 28 bei entlüfteter Betriebsbremskammer 20 in die Lösestellung zurückgeholt wird. Die Federspeicherbremskolbenstange 18 ist in einer zentralen Öffnung der Betriebsbremskolbenstange 28 des Betriebsbremszylinders 2 abgestützt, so dass die Federspeicherbremskolbenstange 18 über die Betriebsbremskolbenstange 28 auf die Excenterwelle 7 und damit auch auf die auf die Zangenhebel 9 der Bremszange 5 wirken kann.

Nicht zuletzt ist an einer äußeren Umfangsfläche der Betriebsbremskolbenstange 28 des Betriebsbremszylinders 2 ein radialer innerer Rand eines Rollbalgs 35 befestigt ist, dessen radial äußerer Rand an einer Durchgangsöffnung des Betriebsbremszylinders 2 zum Getriebegehäuse 17 hin befestigt ist, um die Federkammer 31 gegenüber dem Innenraum 36 des Excentergetriebes 3 abzudichten.

Wie bereits oben angedeutet, weist der aus dem Federspeicherbremszylinder 4, dem Betriebsbremszylinder 2 und dem Excentergetriebe 3 bestehende Krafterzeuger 1 die bevorzugt einzige, die Federkammer 14 des Federspeicherbremszylinders 4, die Federkammer 31 des Betriebsbremszylinders 2 sowie bevorzugt auch einen Innen- oder Excenterwellenraum 36 des Gehäuses 15 mit der Atmosphäre verbindende Be- und Entlüftungsbohrung 34 auf.

In der beispielsweise im Bremszylindergehäuse ausgebildeten Be- und Entlüftungsbohrung 34 ist ein nach Art eines Labyrinths ausgebildeter, eine auf das Zuspannen und/oder Lösen der Bremse zurückzuführende Strömung von den Federkammern 14, 31 bzw. von dem Innenraum 36 des Excentergetriebes 3 in die Atmosphäre bzw. von der Atmosphäre in die Federkammern 14, 31 bzw. in den Innenraum 36 des Excentergetriebes 3 umlenkender Labyrinth-Strömungskanal 38 ausgebildet. Insbesondere lenkt der Labyrinth-Strömungskanal 38 die Luftströmung aus den Federkammern 14, 31 bzw. aus dem Innenraum 36 des Getriebegehäuses 17 in die Atmosphäre bzw. die Strömung von der Atmosphäre in Federkammern 14, 31 bzw. aus dem Innenraum 36 des Getriebegehäuses 17 richtungsbezogen mehrmals um.

Wie aus Fig.2 hervorgeht, ist die Be- und Entlüftungsbohrung 34 in Gebrauchslage des Betriebsbremszylinders 2 bzw. des Krafterzeugers 1 gesehen im untersten Bereich des Gehäuses 15 angeordnet. Insbesondere kann die Be- und Entlüftungsbohrung 34 in einem beispielsweise nach unten besonders ausgebauchten Bereich des Gehäuses 15 ausgebildet sein.

Der Labyrinth-Strömungskanal 38 ist beispielsweise in einem in die Be- und Entlüftungsbohrung 34 eingesetzten Einsatz 40 ausgebildet. Dieser Einsatz 40 wird bevorzugt durch eine Kunststoffschraube gebildet, welche in die Be- und Entlüftungsbohrung 34 einschraubbar ist. Für die Schraube 40 ist aber auch jegliches anderes Material denkbar, z.B. auch ein Metall. Andererseits kann der Einsatz 40 auch in anderer Weise in der Be- und Entlüftungsbohrung 34 gehalten sein, beispielsweise durch Pressung.

Schließlich ist auch der Innenraum 36 des Excentergetriebes 3 mittels eines bevorzugt in einer Wandung des Gehäuses 15 ausgebildeten Strömungskanals 66 mit dem von der Atmosphäre abgewandten Ende des Labyrinth-Strömungskanals 38 bzw. des Einsatzes 40 verbunden. Dieser Strömungskanal 66 wird durch den sich anschließenden und fluchtenden Strömungskanal 62 in der Wandung des Gehäuses 15 fortgesetzt, welcher die Federkammer 31 des Betriebsbremszylinders 2 über die Be- und Entlüftungsbohrung 34 be- und entlüftet.

Wie Fig.2 zeigt, wird der die Federkammer 14 des Federspeicherbremszylinders 4 mit dem von der Atmosphäre abgewandten Ende des Labyrinth-Strömungskanals 38 in Verbindung bringende Strömungskanal 64 bevorzugt durch wenigstens eine durch einen Deckel 68 zur Atmosphäre hin abgedeckte Nut 70 im Gehäuse 15 gebildet. Dieser Deckel 68 besteht vorzugsweise aus Kunststoff und ist in der Nut 70 beispielsweise reib- und/oder formschlüssig gehalten und ist bevorzugt in diese eingeclipst.

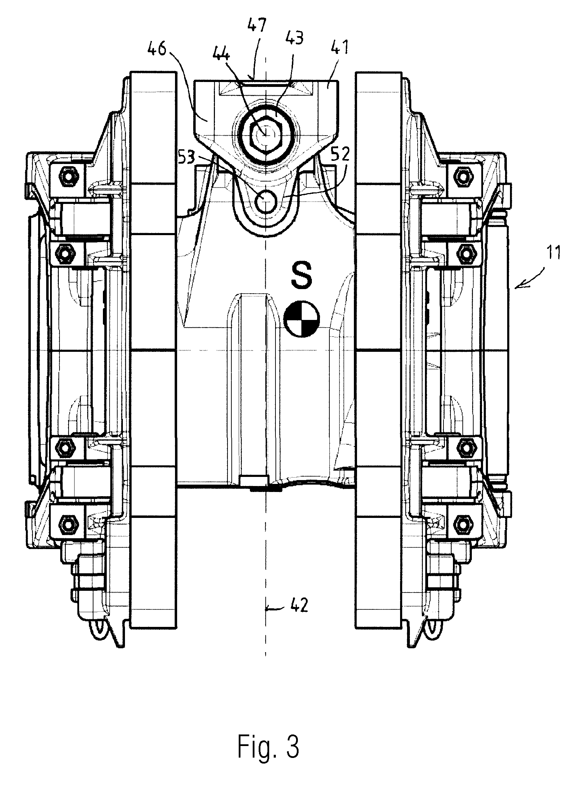

Wie Fig.3 bis Fig.7 zeigen, ist die Bremszangeneinheit 11 mit dem Krafterzeuger 1 und der Bremszange 5 durch eine Konsole 41 an einem Drehgestell schwenkbar befestigt. Dabei ist die Bremszangeneinheit 11 mittels eines bevorzugt in der oder parallel zur Mittelebene 42 der Bremsscheibe angeordneten und von einer Mittelachse der Bremsscheibe vertikal beabstandeten Bolzens 43 an der Konsole 41 schwenkbar gelagert.

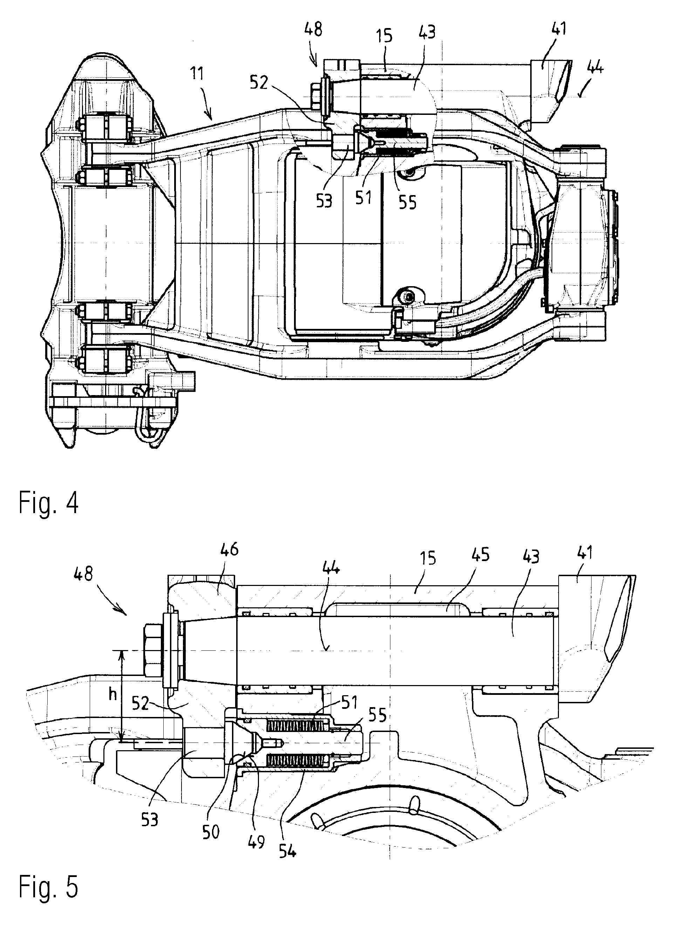

Die Bremszangeneinheit 11 kann daher in Bezug zu der am Drehgestell befestigten Konsole 41 Schwenkbewegungen um eine Mittelachse 44 des Bolzens 43 und quer zur Bremsscheibe 42 ausführen. Der Bolzen 43 durchragt beispielsweise eine Durchgangsbohrung 45 eines kopfseitigen Abschnitts des Gehäuses 15 und ist jeweils endseitig in Durchgangsbohrungen von Schenkeln 46 der Konsole 41 festgelegt, beispielsweise durch Pressung und Verschraubung (siehe Fig.5).

Die Bremszangeneinheit 11 ist normalerweise genau vertikal bzw. mit den Bremsbelägen 13 parallel zur Bremsscheibe 42 in einer im Folgenden "Neutralposition" genannten Position oder Schwenklage ausgerichtet. Um die Bremszangeneinheit 11 in die Neutralposition zurückzustellen, wenn diese aus der Neutralposition heraus verschwenkt ist, beispielsweise durch einen außermittigen Schwerpunkt S (siehe Fig.3), durch Fliehkräfte bei Kurvenfahrt oder durch einseitiges Einfedern des Drehgestells, ist eine Rückstelleinrichtung 48 zur Rückstellung der Bremszangeneinheit 11 relativ zur Konsole 41 bzw. zum Drehgestell in die Neutralposition vorgesehen.

Die Rückstelleinrichtung 48 weist dabei eine mit der Konsole 41 verbundene Fläche 49 auf, welche mit einer komplementären Fläche 50 des Gehäuses 15 durch Keilwirkung zusammen wirkt. Dabei sind die eine Fläche 49 und die komplementäre Fläche 50 in Bezug zur Mittelachse 44 des Bolzens 43 um einen Hebelarm h versetzt angeordnet, in einer Richtung parallel zur Mittelachse 44 des Bolzens 43 relativ zueinander verschieblich gelagert und durch Federmittel 51 gegeneinander derart belastet, dass bedingt durch die Keilwirkung zwischen der einen Fläche 49 und der komplementären Fläche 50 die Bremszangeneinheit 11 in die Neutralposition vorgespannt ist (Fig.5). Denn bedingt durch die Keilwirkung zwischen den beiden gegeneinander vorgespannten Flächen 49, 50 entsteht ein rückstellendes Drehmoment in die Neutralposition, wie später noch gezeigt wird. Die Wirkrichtung der Federmittel 51, d.h. die Richtung, in welcher die Federkräfte als Druckkräfte wirken, ist hier parallel zur Mittelachse 44 des Bolzens 43.

Besonders bevorzugt ist die mit der Konsole 41 verbundene Fläche 49 an einem von der Konsole 41 zum Gehäuse 15 hin weg ragenden Arm 52 als Verlängerung eines Schenkels 46 der Konsole 41 gehalten oder ausgebildet. Im vorliegenden Fall bildet dann ein Teil dieses Armes 52 den Hebelarm h. Der Hebelarm h erstreckt sich dann von der Konsole 41 zum Gehäuse 15 hin (siehe Fig.5). Besonders bevorzugt wird die mit der Konsole 41 verbundene Fläche 49 durch eine Außenfläche eines Zapfens 53 gebildet, der an einem freien Ende des Armes 52 parallel zur Mittelachse 44 des Bolzens 43 gehalten ist. Dabei kann der Zapfen 53 in eine Bohrung am freien Ende des Armes 52 beispielsweise eingepresst oder eingeschraubt sein. Eine Längs- oder Mittelachse des Zapfens 53 ist dabei parallel zur Mittelachse 44 des Bolzens 43.

Ebenfalls besonders bevorzugt ist die komplementäre Fläche 50 an einem in einer Führung 54 des Gehäuses 15 parallel zur Mittelachse 44 des Bolzens 43 verschieblich geführten Schieber 55 ausgebildet, welcher durch die sich am Gehäuse 15 abstützenden Federmittel 51 gegen den Zapfen 53 vorgespannt ist. Dieser Schieber 55 ist beispielsweise ebenfalls bolzenförmig ausgebildet. Die Führung 54 für den Schieber 55 im Gehäuse 15 wird beispielsweise durch eine im Gehäuse 15 gelagerte Führungshülse mit gestufter zentraler Durchgangsöffnung und mit einer Stufe als Widerlager für die Federmittel 51 gebildet. Andererseits stützen sich die Federmittel 51 an einer Stufe des Schiebers 55 ab, so dass der Schieber 55 gegen den Zapfen 53 vorgespannt wird. Bevorzugt werden die Federmittel 51 durch ein Tellerfederpaket seriell hintereinander angeordneter Tellerfedern gebildet.

Ganz besonders bevorzugt werden beide Flächen 49, 50 durch Kegelflächen gebildet. Beispielsweise wird die eine, der Konsole 41 zugeordnete Fläche 49 durch eine an dem dem Schieber 55 zugewandten Ende des Zapfens 53 ausgebildete radial äußere und sich zum Schieber 55 hin verjüngende Kegelfläche gebildet. Weiterhin beispielsweise wird die komplementäre, dem Gehäuse 15 zugeordnete komplementäre Fläche 50 durch eine radial innere Kegelfläche gebildet. Der weibliche, konkave Teil in Form der Kegelfläche 50 ist dann durch die Federmittel 51 auf den dadurch teilweise umschlossenen männlichen prominenten Teil in Form der der Konsole 41 zugeordneten Kegelfläche 49 vorgespannt.

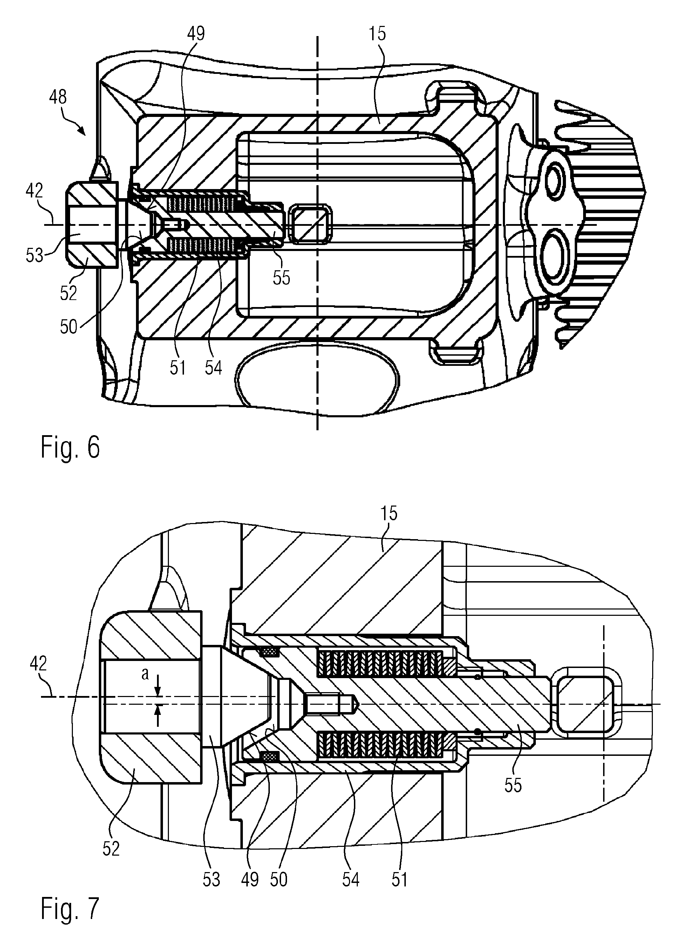

Fig.6 zeigt die Situation in einer Querschnittsansicht von oben, wenn die Bremszangeneinheit 11 sich in der vertikalen Neutralposition befindet. In der Neutralposition liegt die Mittelachse des Schiebers 55 beispielsweise in der Mittelebene 42 der Bremsscheibe.

Beim Ausschwenken der Bremszangeneinheit 11 relativ zur Konsole 41 aus der Neutralposition heraus (siehe Fig.7) dreht die in der Führungshülse 54 des Gehäuses 15 geführte komplementäre Kegelfläche 50 in einer Richtung senkrecht zur Mittelachse des Schiebers 55 und gleitet dabei an der einen, am Arm 52 der Konsole 41 befestigten einen Kegelfläche 49 entlang. Diese Ausschwenkung der Bremszangeneinheit 11 in der Draufsicht von Fig.7 nach unten ist durch den Buchstaben a gekennzeichnet.

Da in radialer Richtung keine Ausweichmöglichkeit besteht, wird der mit der komplementären Kegelfläche 50 versehene Schieber 55 bedingt durch die Keil- oder Kegelwirkung in der Führungshülse 54 gegen die Wirkung des Federpakts 51 aus Tellerfedern in Fig.7 um ein Stück nach rechts verschoben. Die ohnehin druckvorgespannten Federmittel 51 werden aufgrund der axialen Verschiebung des Schiebers 55 noch weiter zusammengedrückt und bewirken eine Reaktionsfederkraft, welche versucht, den mit der komplementären Kegelfläche 50 versehenen Schieber 55 in seine Ausgangslage von Fig.6 zurück zu verschieben. Diese rückstellende, durch die Federkräfte hervorgerufene Bewegung des Schiebers 55 sorgt wiederum durch die Keil- oder Kegelwirkung zwischen den beiden Kegelflächen 49, 50 dafür, dass auf die sich an der Konsole 41 über den Hebelarm h abstützende Bremszangeneinheit 11 ein rückstellendes Drehmoment wirkt, welches die Bremszangeneinheit 11 in ihre Neutralposition zurückdrängt.

Gemäß einer weiteren, hier nicht dargestellten Ausführungsform könnten anstatt Kegelflächen 49, 50 auch Keilflächen vorgesehen werden, um einen Keileffekt zwischen den beiden Flächen 49, 50 hervorzurufen. Auch könnte anstatt die dem Gehäuse 15 zugeordnete komplementäre Fläche 50 die der Konsole 41 zugeordnete Fläche 49 an einem längsverschieblichen Körper angeordnet sein bzw. beide Flächen 49, 50 an jeweils längsverschieblichen Körpern ausgebildet sein.

### Bezugszeichenliste

- 1: Krafterzeuger
- 2: Betriebsbremszylinder
- 3: Excentergetriebe
- 4: Federspeicherbremszylinder
- 5: Bremszange
- 6: Zwischenwand
- 7: Excenterwelle
- 9: Zangenhebel
- 8: Federspeicherbremskolben
- 10: Speicherfeder
- 11: Bremszangeneinheit
- 12: Federspeicherbremskammer
- 13: Bremsbeläge
- 14: Federkammer
- 15: Gehäuse
- 18: Federspeicherbremskolbenstange
- 20: Betriebsbremskammer
- 21: Bohrung
- 22: Dichtungsanordnung
- 24: Dichtung
- 26: Betriebsbremskolben
- 28: Betriebsbremskolbenstange
- 30: Rückholfeder
- 31: Federkammer
- 34: Be- und Entlüftungsbohrung
- 36: Innenraum
- 38: Labyrinth-Strömungskanal
- 40: Einsatz
- 41: Konsole
- 42: Mittelebene Bremsscheibe
- 43: Bolzen
- 44: Mittelachse Bolzen
- 45: Durchgangsbohrung
- 46: Schenkel
- 48: Rückstelleinrichtung
- 49: Fläche
- 50: Fläche
- 51: Federmittel
- 52: Arm
- 53: Zapfen
- 54: Führungshülse
- 55: Schieber
- 62: Strömungskanal
- 64: Strömungskanal
- 66: Strömungskanal
- 68: Deckel
- 70: Nut

## Patentansprüche

1. Bremseinrichtung eines Schienenfahrzeugs, beinhaltend eine mit einer Bremsscheibe (42) zusammen wirkenden Bremszangeneinheit (11) mit einem Krafterzeuger (1) und einer Bremszange (5) sowie eine Konsole (41) zur Befestigung der Bremszangeneinheit (11) an einem Drehgestell, wobei
a. die Bremszangeneinheit (11) mittels wenigstens eines Bolzens (43) an der Konsole (41) schwenkbar gelagert ist, und
b. eine Rückstelleinrichtung (48) zur Rückstellung der Bremszangeneinheit (11) relativ zur Konsole (41) aus einer in Bezug zu einer vorgegebenen Neutralposition verschwenkten Position in die Neutralposition vorgesehen ist,
**dadurch gekennzeichnet, dass**
c. die Rückstelleinrichtung (48) wenigstens eine der Konsole (41) zugeordnete Fläche (49) aufweist, welche mit einer komplementären, einem Gehäuse (15) der Bremszangeneinheit (11) zugeordneten Fläche (50) durch Keilwirkung zusammen wirkt, wobei die eine Fläche (49) und die komplementäre Fläche (50)
d. in Bezug zu einer Mittelachse (44) des Bolzens (43) um einen Hebelarm (h) versetzt angeordnet, in einer Richtung parallel zur Mittelachse (44) des Bolzens (43) relativ zueinander verschieblich gelagert und durch Federmittel (51) gegeneinander derart belastet sind, dass
e. bedingt durch die Keilwirkung zwischen der einen Fläche (49) und der komplementären Fläche (50) die Bremszangeneinheit (11) in die Neutralposition vorgespannt ist.

2. Bremseinrichtung nach Anspruch 1, **dadurch gekennzeichnet, dass** die eine der Konsole (41) zugeordnete Fläche (49) an einem von der Konsole (41) weg ragenden Arm (52) gehalten oder ausgebildet ist.

3. Bremseinrichtung nach Anspruch 2, **dadurch gekennzeichnet, dass** die eine der Konsole (41) zugeordnete Fläche (49) durch eine Außenfläche eines Zapfens (53) gebildet wird, der an einem freien Ende des Arms (52) parallel zur Mittelachse (44) des Bolzens (43) zumindest axialfest gehalten ist.

4. Bremseinrichtung nach Anspruch 3, **dadurch gekennzeichnet, dass** der Zapfen (53) in das freie Ende des Arms (52) eingepresst oder eingeschraubt ist.

5. Bremseinrichtung nach Anspruch 3 oder 4, **dadurch gekennzeichnet, dass** die komplementäre Fläche (50) an einem in einer Führung (54) des Gehäuses (15) parallel zur Mittelachse (44) des Bolzens (43) verschieblich geführten Schieber (55) ausgebildet ist, welcher durch die sich am Gehäuse (15) abstützenden Federmittel (51) gegen den Zapfen (53) vorgespannt ist.

6. Bremseinrichtung nach Anspruch 5, **dadurch gekennzeichnet, dass** die Führung (54) für den Schieber (55) durch eine im Gehäuse (15) gelagerte Führungshülse gebildet wird.

7. Bremseinrichtung nach einem der vorhergehenden Ansprüche, **dadurch gekennzeichnet, dass** die Federmittel (51) durch ein Tellerfederpaket seriell hintereinander angeordneter Tellerfedern gebildet werden.

8. Bremseinrichtung nach einem der vorhergehenden Ansprüche, **dadurch gekennzeichnet, dass** die eine Fläche (49) durch eine Kegel- oder Keilfläche und dass die komplementäre Fläche (50) durch eine Kegel- oder Keilfläche gebildet wird.

9. Bremseinrichtung nach Anspruch 8, **dadurch gekennzeichnet, dass** die eine Fläche (49) durch eine radial äußere Kegelfläche und dass die komplementäre Fläche (50) durch eine radial innere Kegelfläche gebildet wird oder umgekehrt.

10. Bremseinrichtung nach einem der vorhergehenden Ansprüche, **dadurch gekennzeichnet, dass** sich der Hebelarm (h) von der Konsole (41) zum Gehäuse (15) hin erstreckt.

11. Bremseinrichtung nach einem der vorhergehenden Ansprüche, **dadurch gekennzeichnet, dass** die Wirkrichtung der Federmittel (51) parallel zur Mittelachse (44) des Bolzens (43) ist.

12. Bremseinrichtung nach einem der vorhergehenden Ansprüche, **dadurch gekennzeichnet, dass** die Bremszangeneinheit (11) als Krafterzeuger (1) wenigstens einen pneumatischen Betriebsbremszylinder (2) umfasst, mit einem im Gehäuse (15) angeordneten und mit einer Betriebsbremskolbenstange (28) versehenen Betriebsbremskolben (26), der durch Be- und Entlüften einer Bremskammer (20) in Löse- oder Zuspannstellung bringbar ist.

13. Bremseinrichtung nach Anspruch 12, **dadurch gekennzeichnet, dass** die Bremszangeneinheit (11) als Krafterzeuger (1) einen Kombibremszylinder mit dem pneumatischen Betriebsbremszylinder (2) und einem Federspeicherbremszylinder (4) umfasst, wobei
a. der Federspeicherbremszylinder (4) einen in einem Federspeicherbremszylindergehäuse angeordneten, durch wenigstens eine Speicherfeder (10) betätigbaren Federspeicherbremskolben (8) mit einer Federspeicherbremskolbenstange (18) beinhaltet, welche durch eine zentrale Bohrung (21) einer Zwischenwand (6) zwischen dem Betriebsbremszylinder (2) und dem Federspeicherbremszylinder (4) derart ragt, dass sie auf den Betriebsbremskolben (26) wirkt, wobei der Federspeicherbremskolben (8) eine die Speicherfeder (10) beinhaltende Federkammer (14) von einer Federspeicherbremskammer (12) des Federspeicherbremszylinders (4) trennt.

14. Bremseinrichtung nach Anspruch 12 oder 13, **dadurch gekennzeichnet, dass** die Bremszangeneinheit (11) mit einem Getriebe (3) eine Baueinheit bildet, dessen Getriebeeingang mit der Betriebsbremskolbenstange (28) und dessen Getriebeausgang mit der Bremszange (5) zusammen wirkt.

## Claims

1. Brake device of a rail vehicle, including a brake calliper unit (11 interacting with a brake disc (42) and comprising a power generator (1) and a brake calliper (5) as well as a bracket (41) for fastening said brake calliper unit (11) on a bogie, wherein
(a) said brake calliper unit (11) is bracketed so as to be pivoting by means of at least one bolt (43) on said bracket (41), and
(b) a resetting means (48) is provided for resetting said brake calliper unit (11) relative to said bracket from a position pivoted with respect to a predetermined neutral position into said neutral position,
**characterized in that**
(c) said resetting means (48) is provided with at least one area (49) associated with said bracket (41), which area interacts by a wedge effect with a complementary area (50) associated with a housing (15) of said brake calliper unit (11), with said first area (49) and said complementary area (50)
(d) being arranged at an offset relative to a centre axis (44) of said bolt (43) around a lever arm (h), being supported for displacement relative to each other along a direction parallel with said centre axis (44) of said bolt (43), and being loaded by spring means (51) relative to each other in such a way that
(e) on account of the wedge effect between said first area (49) and said complementary area (50), said brake calliper unit (11) is preloaded into said neutral position.

2. Brake device according to Claim 1, **characterized in that** said first area (49) associated with said bracket (41) is held or formed on an arm (52) projecting away from said bracket (41).

3. Brake device according to Claim 2, **characterized in that** said first area (49) associated with said bracket (41) is formed by an outside area of a stud (53) that is held on a free end of said arm (52) in parallel to said centre axis (44) of said bolt (43) to be fixed at least in the axial direction.

4. Brake device according to Claim 3, **characterized in that** said stud (53) is pressed or screwed into the free end of said arm (52).

5. Brake device according to Claim 3 or 4, **characterized in that** said complementary area (50) is formed on a slide (55) guided for displacement in a guide (54) of said housing (15) in parallel to said centre axis (44) of said bolt (43), which slide is preloaded against said stud (53) by spring means (51) supported on said housing (15).

6. Brake device according to Claim 5, **characterized in that** said guide (54) for said slide (55) is constituted by a guiding sleeve supported in said housing (15).

7. Brake device according to any of the preceding Claims, **characterized in that** said spring means (51) are constituted by a disc spring package including disc springs in serial tandem arrangement.

8. Brake device according to any of the preceding Claims, **characterized in that** said first area (49) is formed by a conical or tapered area and that said complementary area (50) is formed by a conical or tapered area.

9. Brake device according to Claim 8, **characterized in that** said first area (49) is constituted by a radially outer conical area and that said complementary area (50) is constituted by a radially inner conical area, or vice versa.

10. Brake device according to any of the preceding Claims, **characterized in that** said lever arm (h) extends from said bracket (41) towards said housing (15).

11. Brake device according to any of the preceding Claims, **characterized in that** the direction of action of said spring means is parallel to said centre axis (44) of said bolt (43).

12. Brake device according to any of the preceding Claims, **characterized in that** said brake calliper unit (11) as power generator (1) comprises at least one pneumatic service brake cylinder (2) with a service brake piston disposed in said housing (15) and provided with a service brake piston rod (28), which service brake piston is adapted to be carried into a release or brake application position by aerating and venting a brake chamber (20).

13. Brake device according to any of the preceding Claims, **characterized in that** said brake calliper unit (11) as power generator (1) comprises a combined brake cylinder with a pneumatic service brake cylinder (2) and a spring brake actuator (4), wherein
(a) said spring brake actuator (4) includes a spring brake piston (8) disposed in a spring brake actuator housing and operable by at least one accumulator spring (10), which piston includes a spring brake piston rod (18) that projects through a central bore (21) of a partitioning wall (6) between said service brake cylinder (2) and said spring brake actuator (4) in such a way that it acts upon said service brake piston (26), with said spring brake piston (8) separating a spring chamber (14) including said accumulator spring (10) from a spring brake chamber (12) of said spring brake actuator (4).

14. Brake device according to any of the preceding Claims, **characterized in that** said brake calliper unit (11) cooperates with a gearing (3) to form a structural unit, with the gearing input cooperating with said service brake piston rod (28) and with the gearing output cooperating with said brake calliper (5).

## Revendications

1. Dispositif de freinage d'un véhicule ferroviaire, contenant une unité d'étrier de frein (11 interagissant avec un disque de frein (42) et comprenant un générateur d'énergie (1) and a étrier de frein (5) ainsi qu'une console (41) pour le fixage de ladite unité d'étrier de frein (11) sur un bogie, dans lequel
(a) ladite unité d'étrier de frein (11) est logée de façon qu'elle peut pivoter moyennant au moins boulon (43) sur ladite console (41), et
(b) un moyen de rappel (48) est disposé pour le rappel de ladite unité d'étrier de frein (11) relativement à ladite console à partir d'une position pivotée relativement à une position neutre prédéterminée dans ladite position neutre,
caractérisé en ce
(c) que ledit moyen de rappel (48) est muni d'au moins une aire (49) affectée à ladite console (41), laquelle aire interagit par un coin avec une aire complémentaire (50) affectée à un carter (15) de ladite unité d'étrier de frein (11), à ladite première aire (49) et ladite aire complémentaire (50)
(d) étant disposées à un déport relatif à un axe central (44) dudit boulon (43) autour d'un bras de levier (h), étant logées pour un déplacement l'un relativement à l'autre le long un sens parallèle audit axe central (44) dudit boulon (43), en étant mise en précontrainte moyennant des moyens à ressort (51) l'une relativement à l'autre d'une telle manière
(e) qu'en vertu de l'effet de coin entre ladite première aire (49) et ladite aire complémentaire (50), ladite unité d'étrier de frein (11) est mise en précontrainte dans ladite position neutre.

2. Dispositif de freinage selon la revendication 1, **caractérisé en ce que** ladite première aire (49) affectée à ladite console (41) est maintenue ou formée sur un bras (52) faisant saillie à partir de ladite console (41).

3. Dispositif de freinage selon la revendication 2, **caractérisé en ce que** ladite première aire (49) affectée à ladite console (41) est formée par une aire extérieure d'un téton (53), qui est maintenu à une extrémité libre dudit bras (52) en parallèle audit axe central (44) dudit boulon (43) pour son fixage au moins en sens axial.

4. Dispositif de freinage selon la revendication 3, **caractérisé en ce que** ledit téton (53) est pressé ou vissé dans l'extrémité libre dudit bras (52).

5. Dispositif de freinage selon la revendication 3 ou 4, **caractérisé en ce que** ladite aire complémentaire (50) est formée sur un curseur (55) guidé pour un déplacement dans un guide (54) dudit carter (15) en parallèle audit axe central (44) dudit boulon (43), ce curseur étant mis en précontrainte contre ledit téton (53) par un moyen à ressort (51) logé audit carter (15).

6. Dispositif de freinage selon la revendication 5, **caractérisé en ce que** ledit guide (54) pour ledit curseur (55) est constitué par une douille de guidage logée dans ledit carter (15).

7. Dispositif de freinage selon une quelconque des revendications précédentes, **caractérisé en ce que** ledit moyen à ressort (51) set constitué par un bloc de ressorts à disques, qui contient des ressorts à disques en un arrangement sériel en succession.

8. Dispositif de freinage selon une quelconque des revendications précédentes, **caractérisé en ce que** ladite première aire (49) est formée par une aire conique ou une surface de coin, et **en ce que** ladite aire complémentaire (50) est constituée par une aire conique ou une surface de coin.

9. Dispositif de freinage selon la revendication 8, **caractérisé en ce que** ladite première aire (49) est constituée par une aire conique radialement extérieure, et **en ce que** ladite aire complémentaire (50) est constituée par une aire conique radialement intérieure, ou inversement.

10. Dispositif de freinage selon une quelconque des revendications précédentes, **caractérisé en ce que** ledit bras de levier (h) s'étend à partir de ladite console (41) vers ledit carter (15).

11. Dispositif de freinage selon une quelconque des revendications précédentes, **caractérisé en ce que** le sens d'action dudit moyen à ressort est parallèle audit axe central (44) dudit boulon (43).

12. Dispositif de freinage selon une quelconque des revendications précédentes, **caractérisé en ce que** ladite unité d'étrier de frein (11) en tant que générateur d'énergie (1) comprend au moins un cylindre de frein de service pneumatique (2) avec un piston de frein de service, qui est disposé dans ledit carter (15) et qui est muni d'une tige de piston de frein de service (28), laquelle est apte à être porté en une position de desserrage ou de serrage de frein par ventilation et aération une chambre de frein (20).

13. Dispositif de freinage selon une quelconque des revendications précédentes, **caractérisé en ce que** ladite unité d'étrier de frein (11) en tant que générateur d'énergie (1) comprend un cylindre de frein combiné avec un cylindre de frein de service pneumatique (2) et un cylindre de frein à ressort accumulateur (4), dans lequel
(a) ledit cylindre de frein à ressort accumulateur (4) comprend un piston de frein à ressort accumulateur (8) disposé dans un carter de cylindre de frein à ressort accumulateur et commandable par au moins un ressort accumulateur (10), ce piston comprenant une tige de piston de frein à ressort accumulateur (18), qui fait saillie à travers un forage central (21) d'une paroi intermédiaire (6) entre ledit cylindre de frein de service (2) et ledit cylindre de frein à ressort accumulateur (4) d'une telle manière, qu'il agisse sur ledit piston de frein de service (26), audit piston de frein à ressort accumulateur (8) séparant une chambre à ressort (14), qui contient ledit ressort accumulateur (10), d'une chambre de frein à ressort accumulateur (12) dudit cylindre de frein à ressort accumulateur (4).

14. Dispositif de freinage selon une quelconque des revendications précédentes, **caractérisé en ce que** ladite unité d'étrier de frein (11) coopère avec une transmission (3) en formant un module structurel, à l'entrée de transmission coopérant avec ladite tige de piston de frein de service (27) et à la sortie de transmission coopérant avec ledit étrier de frein (5).
